# NEW EUROPEAN PATENT SPECIFICATION

(11) **EP 1 597 138 B2**
(45) Date of publication and mention of the opposition decision: **31.08.2011**
(45) Mention of the grant of the patent: 14.11.2007
(21) Application number: 04713950.6
(22) Date of filing: 24.02.2004
(51) Int. Cl.: B62J 11/00, B62J 35/00, B60K 15/04

(54) **MULTIPURPOSE SUPPORT SYSTEM FOR MOTORCYCLE EQUIPMENT**
MEHRZWECKTRAGSYSTEM FÜR MOTORRADZUBEHÖR
SYSTEME POLYVALENT DE SUPPORT POUR EQUIPEMENTS DE MOTOCYCLES

(30) Priority: 25.02.2003 IT MI20030333
(43) Date of publication of application: 23.11.2005
(73) Proprietor: Ognissanti, Stefano, 20047 Brugherio (IT); Rigoni, Luca Umberto, 20052 Monza (IT)
(72) Inventor: RIGONI, Luca, Umberto, I-20052 Monza (IT); OGNISSANTI, Stefano, I-20047 Brugherio (IT)
(74) Representative: Pes, Matteo
(86) International application number: PCT/IB2004/000457
(87) International publication number: WO 2004/076269

(56) References cited:
- WO-A1-2004/035374
- DE-A- 3 035 246
- DE-A1- 2 834 967
- DE-C- 934 270
- DE-U1- 8 625 587
- DE-U1- 9 311 337
- DE-U1- 20 212 566
- FR-A1- 2 432 969
- GB-A- 700 248
- JP-A- 2002 234 478
- US-A1- 2003 042 261
- US-A1- 2004 031 833
- 'Internetsite of Big Mak Accessories, LLC, (BMA), 1669 Talbot Rd. SE, Jefferson, OR 97352, USA'
- 'Pricelist of Big Mak Accessories, LLC, (BMA)'
- 'Magazine BMW Owner News, November 1999, page 13'
- 'Internet - Forum "Adventure Rider" (www.advrider.com),Forum discussion of 24.11.2001 to 26.11.2001'
- 'Internet article on the internetsite www.cycle - gadgets.com; Comment to the airbag of the company BMA'
- 'Internetsite of the company Rocket Locker ( Leslie K. Aldermann), 67160 Airport Rd. St. Clairsville, OH 43950, USA'
- 'Internetsite of the company Rocket Locker (Leslie K. Aldermann); Description Tank Locker'
- 'Forumdiscussion R1Club of 07.02.2003 );'
- 'Forumdiscussion R1Club of 20.12.2002'
- 'Fachbuch "konstruktionselement der Feinmechanik"; Publ. Werne Krause, 2. Auflage, S. 277 bis 279, Carl Hanser Verlag'

## Description

### FIELD OF THE INVENTION

The present invention relates to a universal support system to position motorcycle accessories (or equipments) on the tank.

### PRIOR ART

Universal support devices for motorcycling use are known, which are used to hook containers of various kinds, such as sacks, bags or suitcases, to the tank of motorcycles. Certain devices are based on the use of straps that can be tied around the tank, others make use of adhesive and/or magnetic supports to be positioned on the tank or coverings in leather or fabrics of various types, which are wrapped around the tank.

For example, in patent application EP 1 253 071*,* a universal support system of containers on motorcycle tanks based on the use of adhesive bands is described. In this case the adhesive bands, which are made of a flexible material, adhere to the outer surface of the motorcycle tank and have certain appendices serving as anchorage for the extendible straps of the container to be fixed.

In the French patent application FR 2 760 714 a baggage support is described, which is obtained by partially wrapping the motorcycle tank with a sheath, fixed at the ends, comprising baggage fixing elements.

JP 920 78 53 relates to a supplementary stiff covering for a motorcycle tank, which is fixed to the frame of the vehicle at the anchorage points of the tank.

US 4,059,207 claims a sack for motorcycle use, to be applied to the tank by means of Velcro straps. Such straps fix a support sole to the tank on which, again by the use of Velcro straps, the sack is fixed according to a system enabling the sack alone to be released and leaving the remainder of the support device installed on the tank.

Similarly, in the British patent application No. GB 2 080 222, the support is made with straps which are fixed to the frame of the motorcycle, provided with quick release buckles.

DE 41 07 008 relates to a support enabling bags to be applied on the tank of a motorcycle based on covering the tank with a cover provided with magnetic metallic inserts; the cover being a base to which the bags are fastened, for example by zips.

These same methods have further been applied for fixing objects other than bags to motorcycles. For example, U.S. 5,897,040 relates to a device allowing to fix a mobile telephone holder to a motorcycle by means of straps.

FR-A-2432969 (which is considered to be the closest prior art) discloses an anti-theft device for helmets being constituted of a flexible wire. The wire is provided with two rings at its ends. A first ring slidingly fits the circular cap of the fuel tank of a motorbike. The wire is passed through the helmet front portion and the second ring is then fitted on the fuel cap, thereby locking the helmet. The fuel cap is locked to avoid disengagement of the two rings.

The abovementioned devices for fixing bags, sacks and containers of various types to motorcycle tanks present various drawbacks. Firstly, the adhesive bands form a fixed support: once they have adhered to the outer surface of the motorcycle tank, they cannot, as needed, be removed with ease. Besides, the adhesive substance used can, over time, attack the tank paint or, when the bands are taken off, it may leave residues that are difficult to eliminate. Another drawback of this solution is the visual result: in fact the adhesive bands interfere with the chromatic and/or figurative patterns made by the motorcycle manufacturer.

Similarly, the solutions that use sheathes, straps or rigid coverings are also invasive and unpractical solutions, proving in fact awkward both their mounting on the tank and their dismantling. These supports, which are conceived for constituting the anchorage of other objects, remain themselves fixed on to the vehicle, thus modifying the visual and chromatic appearance thereof.

Also the solution that uses magnets is based on the use of the same in association with coverings in leather or in fabric. Besides the mechanic hold of this solution is critical at high speeds of the motorcycle, when the magnets may not be sufficiently efficient and, therefore, they may encounter shifts or detachments from the tank.

The object of the invention is that of providing a universal support for the anchorage of different objects to a motorcycle tank such as for example containers of various kinds, gadgets, motorcycle accessories, electronic components and instruments, airbags, video cameras, motorcycle cover tarpaulins and helmet holders. The invention in fact overcomes the prior art problems, being of practical installation, thus enabling very rapid mounting and dismantling and enabling to occupy, furthermore, limited volumes. In addition, the solution according to the invention does not interfere with the appearance of the motor vehicle, thus preserving the original chromatic patterns.

### DESCRIPTION OF THE INVENTION

The invention relates to a universal support device for motorcycle accessories as disclosed in claim 1.

According to one conventional embodiment, the caps of motorcycle tanks are composed principally of a fixed outer portion, shaped as a circular crown, which is fixed to the motorcycle tank by at least two screws, and by an opening inner portion for the inner volume of the tank to be accessed.

The device according to the present invention is in particular associated and fixed to said fixed outer portion, or circular crown, when the tank cap is of the type described above.

The support device according to the invention can be made, in practice, according to different equivalent designs. In particular, according to a preferred embodiment, the device is constituted by a annular ring nut that is fixed to the outer crown of the motorcycle tank cap by screws that mesh in the same holes used to fasten the outer crown of the cap to the tank. Accordingly, the installation of the ring nut occurs simply by unscrewing the screws that fix the outer crown of the cap to the tank, and subsequently rescrewing the ring nut to the tank, by at least two screws, with the fixed part of the cap tightened between the tank and the ring nut. The ring nut has a generic circular crown shape such as to enable the opening of the tank cap and not hinder, therefore, refuelings. The ring nut presents on the upper surface thereof means for the anchorage of different objects, such as, sacks, bags, rucksacks, suitcases, trolleys, tarpaulins, small support frames, video cameras, gadgets, etc. For example, the support according to the invention made as described above, may be used to anchor a protective tarpaulin to the motorcycle tank for the covering of the motorcycle itself, the tarpaulin being able to be provided with additional means of hooking to the motorcycle, such as magnets, ties, strings, Velcro belts, in order to make, when in use, an efficient coverage of the vehicle and driver. Through the support according to the invention, it is possible to fix a mobile telephone to the motorcycle in a convenient position for use (and reading of the relative display) by the driver, or fix a helmet thus enabling the driver to transport a supplementary helmet without the movements thereof being hindered. The ring nut may, for example, be provided on said upper surface with protrusions of various forms suitable to couple by fitting to corresponding supports present on the objects to be fixed to the motorcycle.

According to another practical embodiment, the ring nut is threaded so as to enable the mesh of a corresponding male/female ring nut applied to the object to be fixed to the motorcycle tank.

According to a further practical embodiment, the ring nut fixed to the tank enables the abovementioned objects to be anchored by closure means with prior art automatic button fittings. According to these embodiments, the objects can be hooked to the ring nut, or unhooked, by simply pressing one or more buttons which cause the automatic closures to snap.

Again, the ring nut can be coupled to one or more flaps of fabric provided with zips or Velcro bands, so as to enable the hooking of objects provided with corresponding closures.

Further practical embodiments of the invention provides the use of hooking devices on the ring nut with fittings and levers of the type used, for example, in the photographic field to fix video cameras or cameras to tripods.

The ring nut may, according to other equivalent embodiments, be provided with at least one slider or at least one fitting, for example, swallow-tail shaped, and with automatic locking means, such as for example, sprung balls or clips. In this way hooking the objects to the tank is made by coupling one or more suitable elements, which are present on the object to be fixed either to the vehicle, said slider or the abovementioned fitting until they make the automatic locking elements trigger.

A further embodiment according to the invention may also be a device based on the replacement of the screws that, originally according to the design of the vehicle manufacturer, fix the outer crown of the tank cap to the tank itself, with various screws having special supports fixed to the head portion. According to such embodiment, therefore, the support object of the invention is represented by retainer means protruding from the screws of the fixed portion of the tank cap. Obviously, also in this case, the retainer means can be those of the prior art, based on shape, magnetic or zip couplings, etc.

Again according to the finding, the support according to the invention can be made with at least two semicircular supports that can be fixed, like the ring nut, to the fixed part (outer crown) of the tank cap by the screws thereof.

The invention enables to resolve the problems presented by the prior art. Firstly, in fact, the support according to the invention enables to fix a great variety of objects to the tank of a motorcycle with rapid hooking/release systems, thus offering high stability and mechanical hold, even in the case in which the driver or the passenger of the motorcycle, holds on to the objects fixed to the support itself when in motion. When the support is free, it occupies a small volume above the tank cap, and at the same time, permits the opening of the cap for refuelings. It is of easy installation, does not interfere with the appearance of the vehicle and can be dismantled simply by unscrewing the screws that fasten the cap to the tank. The vast range of attachments with which the support can be provided, enables to fix a number of objects to the tank of the motor vehicle, such as bags, rucksacks, suitcases, trolleys, gadgets, helmet holder bags, containers of various kinds, motorcycle cover tarpaulins, electronic equipment, video cameras, satellite navigators, etc.

Also according to the invention, should the support of the invention be intended to fix electronic equipment to the motorcycle tank, the support itself can be provided with elements suited to dampen the vibrations that the motorcycle may transmit.

The support according to the invention can furthermore provide a locking/unlocking device of the coupling between the supported object and the support itself, which device is controlled by a traditional lock or by an equivalent mechanism, such as of the numerical combination type commonly used for suitcases.

The lock, or equivalent mechanism thereof, may be provided either directly on the support of the invention, or they may be housed on the motor vehicle or even on the object to be associated to the support itself.

This latter solution is particularly advantageous when the universal support is used for anchoring a bag, a suitcase, a container, etc., to a motor vehicle. In this case the lock is preferably installed on the bag and is associated, by a suitable connection means, such as a flexible metal cable covered by a sheath, to the locking/unlocking device of the support of the invention. The user may thus release the bag from the support, or lock it to the same, by turning the relative key in the lock, or inserting the opening combination in the corresponding mechanism.

In the case in which the motor vehicle tank has an outer interspace, the means connecting the locking/unlocking device of the support to the lock can be housed inside said interspace.

The locking/unlocking device enables to fasten a variety of objects to the tank, thus preventing any thief from stealing them when the vehicle is immobile. The user of the support according to the present invention, in the case in which it is fitted with the abovementioned locking/unlocking device, is thus able to leave the supported objects unguarded, such as a bag coupled to the motorcycle tank, without necessarily having to provide for their removal when, for example, the vehicle is parked.

In the case in which the support according to the invention is provided with the abovementioned locking/unlocking device, this device can be connected to the centralised opening/closure system of the motor vehicle's locks so as to be opened or closed simultaneously with the other locks of the same motor vehicle. For this reason the lock of the locking/unlocking device can be servo-assisted by an electric actuator, for example connected to a control gearcase and that can be activated from a distance, with a remote control.

According to a preferred embodiment of the present invention, the lock controlling the locking/unlocking device of the support can be activated using the same key for opening/closing the locks provided on the motorcycle. In practice, when the motorbike provides one key for opening/closing the locks, lockers, steering lock, etc., the same key can be used for locking/unlocking the support.

In another embodiment of the present invention, the abovementioned support device comprises a shaped portion so as to constitute a constraint point for an anti-theft device of the motorcycle, of the type in which the relative movement of an element necessary for motion, such as the handlebars or a wheel of the same motorcycle is reversible prevented or limited.

### BRIEF DESCRIPTION OF THE DRAWINGS

The support according to the invention is represented in an examplificative though non-limiting way in the appended drawings of some of the practical embodiments thereof. In particular:

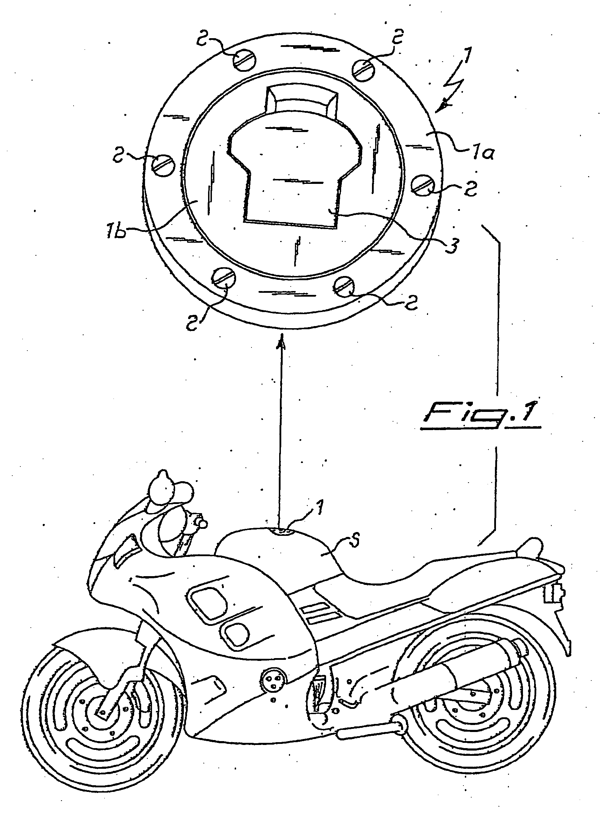

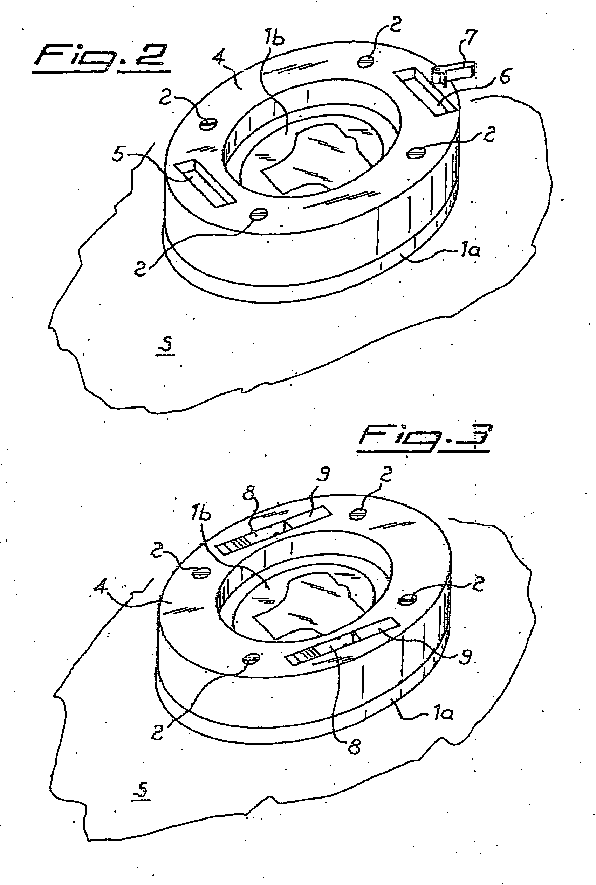

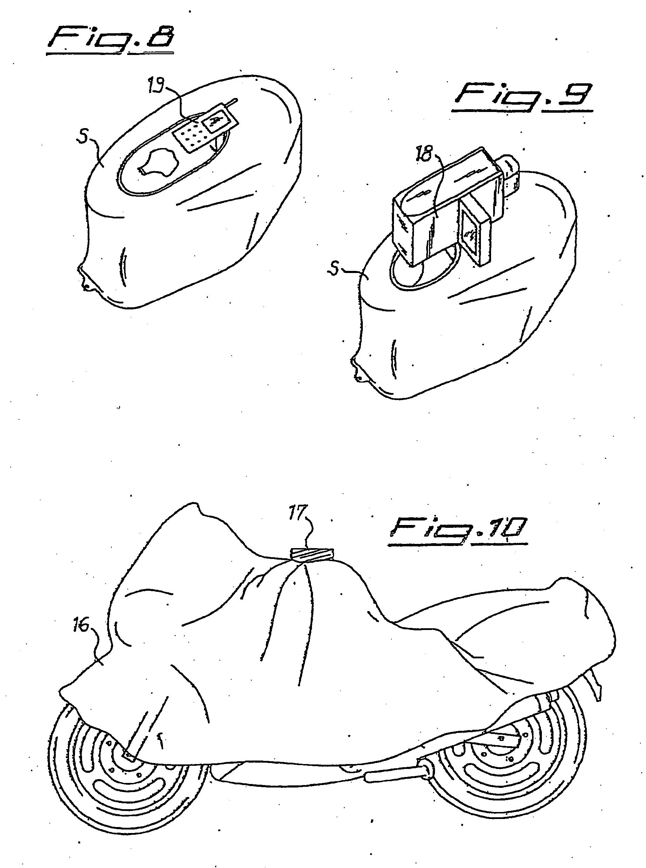

figure 1 shows a tank cap of the type commonly used and a motorcycle; figures 2-7 and 11 show different embodiments of the device according to the invention adapted to function as a support for various objects and accessories; figures 8-10 and 12-17 illustrate certain examples of the device according to the invention used for fixing, a mobile telephone, a video camera, a protective tarpaulin, a sack and a helmet, respectively.

### DETAILED DESCRIPTION OF SOME EMBODIMENTS OF THE INVENTION

Figure 1 illustrates a motorcycle and, in detail, the cap 1 of the tank S according to a conventional embodiment, said cap 1 consisting of an outer portion 1 a, with a circular crown shape, and an inner portion 1b that can be opened to enable access to the inner volume of the tank S during refuelings. The outer circular crown 1a is fixed to the tank S by the screws 2. On the opening inner portion 1b of the cap 1 there is a door 3 covering the lock of the cap itself.

Figure 2 illustrates a practical embodiment of the invention providing the use of a annular ring nut 4 screwed to the outer crown 1a of the cap 1 of the tank S by the screws 2. In general, the device according to the invention provides that at least two screws 2 are used. In particular in the example illustrated the ring nut 4 is screwed to the portion 1 a of the cap 1 by four screws 2. On the ring nut there is a universal fixing system of the type used for anchoring cameras and video cameras to the different supports. In particular said fixing system is composed of a first suitably shaped chamber 5 and of a second chamber 6 fitted with a safety lever 7. This embodiment is thus particularly suitable to the fixing of cameras, video cameras and optical instruments in general on the tank S of the motorcycle. The ring nut 4 has such a shape to enable the complete opening of the cap 1b, when for example it is necessary to perform refuelings or access the inner volume of the tank for other operations.

Figure 3 illustrates an alternative embodiment of the invention providing the use of a annular ring nut 4, fixed to the portion 1 a of the cap of the tank S by screws 2, on which a hooking/unhooking device is installed composed of two fittings 8 fitted with activation buttons 9. In general, the support according to the invention can provide, on the upper surface thereof, various types of hooking/unhooking device so as to enable the coupling of various objects to the support itself. Said hooking/unhooking devices must be practical to use and rapid in both the hooking phase and that of unhooking of the objects to be fixed to the support. For example, said devices may be of the type consisting of one or more seats able to house suitable projections present on the objects to be fixed to the support and provided with locking means (pins, levers, blocks, etc.) that can be activated by the driver by an automatic release push button. Thus when the projections of the object to be fixed are introduced into the abovementioned seats, the locking means are automatically activated thus preventing the object from sliding out of the seats themselves, whereas when the driver operates on the release buttons, the locking means disengage thus leaving the object protrusions free, which may thus be separated from the support.

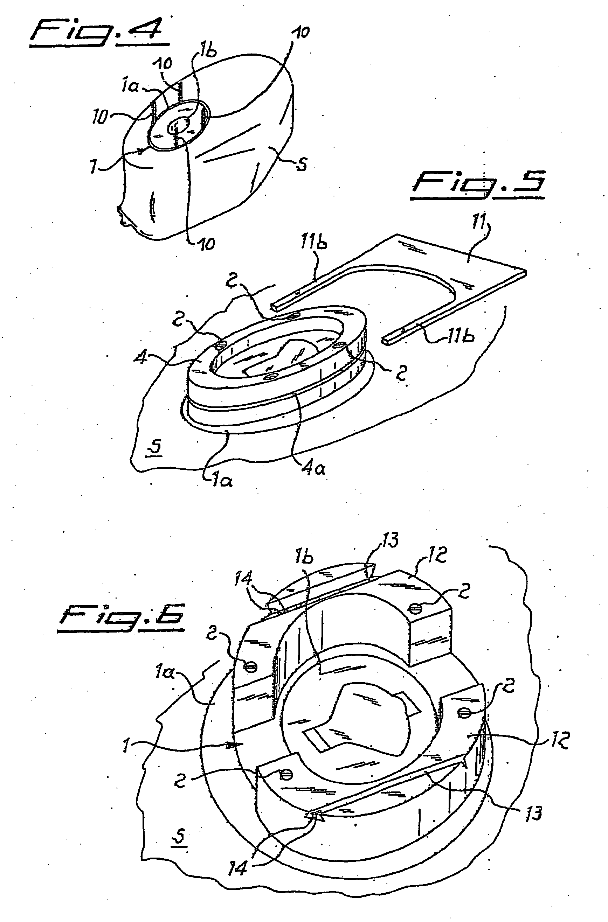

A further preferred embodiment of the invention is illustrated in figure 4. In this example, the support is made by the screws 10 that replace those used by the manufacturer of the motorcycle. Said screws 10 protrude from the upper surface of the outer crown 1a of the cap 1 and have suitable elements (not shown) on their head portion which couple firmly with other elements present on the objects to fix to the tank S. Said coupling may be obtained according to the different states of the art, for example, a shape, magnetic, mechanical coupling, etc. may be used.

Figure 5 illustrates a support system according to the invention providing the coupling of an annular ring nut 4 with a plate 11 provided with extensions 11b fitting into a guide 4a formed on the side surface of the ring nut 4. The ring nut 4 is fixed to the portion (outer crown) 1a of the cap of the tank S. This type of coupling is particularly useful when the plate is associated to a container such as, for example, a bag, a rucksack or a suitcase.

A further embodiment of the invention is illustrated in figure 6. According to this embodiment, the support is made by two semicircular brackets 12 each one fixed to the outer crown 1a of the cap 1 of the tank S by at least two screws 2. The brackets are shaped such as to enable the opening of the mobile portion 1b of the cap 1. On the upper surface of each bracket 12 there is at least one swallow-tail shaped guide 13 for enabling the introduction of objects or supports provided with suitable male guides. The guides 13 may be provided with one or more sprung balls 14 that pin in suitable cavities present on the corresponding guides of the objects coupled to the bracket in order to make a clip to prevent involuntary sliding off of the same objects, once they have been fixed.

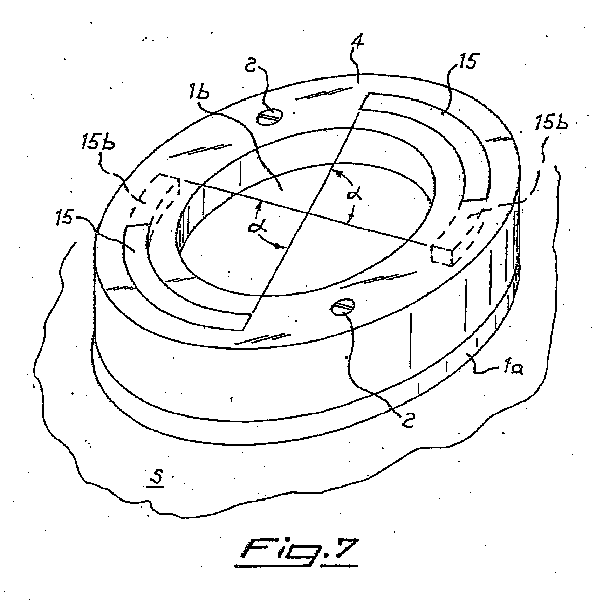

Figure 7 shows a support system according to the invention, consisting of an annular ring nut 4, fixed to the outer portion 1a of the cap 1 of the tank S by the screws 2, and provided with guides 15 on the upper surface thereof. Said guides 15 intercept a circular sector characterised by an angle α. One portion 15b of each guide 15 is made within the volume of the ring nut 4 and accordingly does not present an aperture towards the upper surface of the ring nut 4. The guides 15 thus have a configuration that enables the fixing of different objects provided with special protrusions, by screwing the objects so that said protrusions pin in the guides 15 thereby inserting into portions 15b. The coupling can be achieved by providing a rotation in a clockwise or anticlockwise direction.

Figure 8 gives an example of a possible use of the support according to the invention. In particular figure 8 shows a system for anchoring, also according to the invention, a cellular telephone 19 to the tank S of the motorcycle. The invention thus enables to fix a telephone to the motorcycle in a position allowing an easy use of the telephone and easy reading of the display by the driver.

Figure 9 illustrates a video camera 18 fixed to the tank S of a motorcycle by the support according to the invention.

Figure 10 illustrates a protective tarpaulin 16 for covering the motorcycle, fixed to the tank by a support according to the invention. In particular when the tarpaulin 16 is not used, it can be found folded in a rigid or flexible case 17 fixed to the motor vehicle by any one of the aforementioned devices according to the invention. The case 17 can be opened for enabling the unrolling of the tarpaulin 18. Alternatively, the tarpaulin 16 can be directly associated to the ring nut 4 and, when not used, it can be removed together with the ring nut itself.

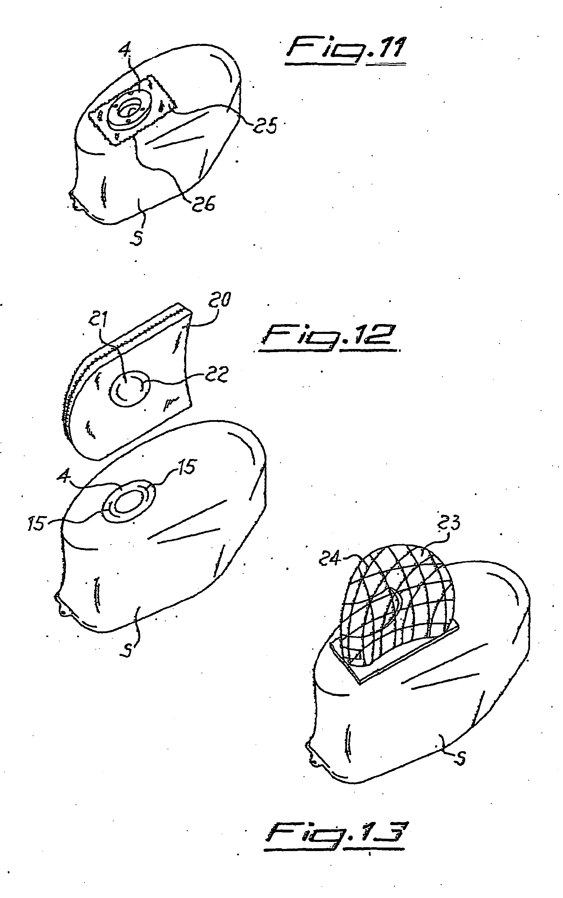

Figure 11 shows a ring nut 4, according to the invention, provided with a portion 25 joined thereto and having a zip 26 at the end for enabling the fixing to the tank S of objects provided with zip. The portion 25 can be in fabric, plastic or metal.

Figure 12 illustrates a possible anchoring system according to the invention, of a bag 20 provided with a support 21 having suitable guides 22 coupling with the guides 15 of the ring nut 4, for example such as that illustrated in figure 7. The bag 20 is fixed to the ring nut 4 by fitting the guides 22 into the guides 15 and turning the bag until a fit is obtained.

Figure 13 illustrates another possible use of a support according to the invention. In particular figure 13 shows a support for anchoring a helmet 23 to the tank S of a motorcycle. The helmet 23 can be anchored to the tank S by a net or tarpaulin 24 that can be stored in a case (not shown) fixed to the ring nut 4 which is in turn fixed to the outer crown of the cap of the tank, or by any one of the prior art helmet retainer systems.

Figures 14-16 show one possible embodiment of the support device according to the invention provided with a safety system comprising means, that can be manually activated by the user, for locking/unlocking the coupling of said accessories to the motorcycle itself.

In particular, figures 14 and 15 illustrate a circular ring nut 27 that can be coupled to a circular plate 28 represented in figure 16. The constraints 29, 30 between ring nut 27 and plate 28 are such that, once coupled, the plate 28 can be shifted in relation to the ring nut 27, or vice versa, between one position of mutual fixing and one position of mutual disengagement, or of simple rest.

The ring nut 27, similarly to the ring nut 4 of the previous figures, can be constrained to the outer crown 1a of the cap 1 of the tank of a motorcycle and the circular plate 28 can be fixed to the object to be supported. Alternatively, the circular plate 28, suitably shaped to form a circular crown, can be fixed to the crown 1a of the cap 1 and the ring nut 27 can on the other hand be constrained firmly to the object to be anchored to the tank.

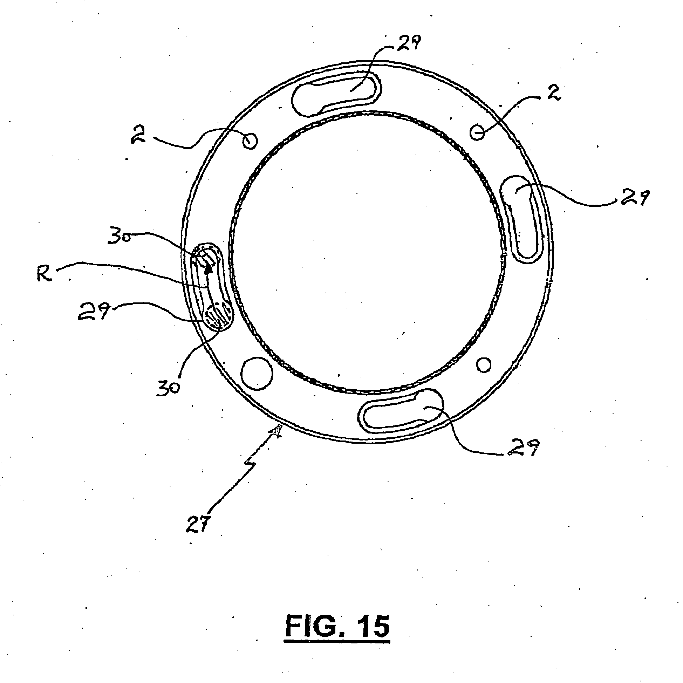

The ring nut 27 has a number of through holes suitable to house suitable clamping screws 2, and at least one fit suitable to make an efficient coupling with the circular plate 28. Preferably, this fit, as in the case illustrated, comprises a number of shaped openings 29 such as to make a bayonet coupling with as many pins 30 that protrude from the surface of the plate 28. For coupling the plate 28 to the ring nut 27, it is sufficient to insert the pin 30 into the apertures 29 and rotate the plate 28 relatively to the ring nut 27, according to the direction of the arrow **R** of figure 15, until taking the pins 30 to the end of stroke.

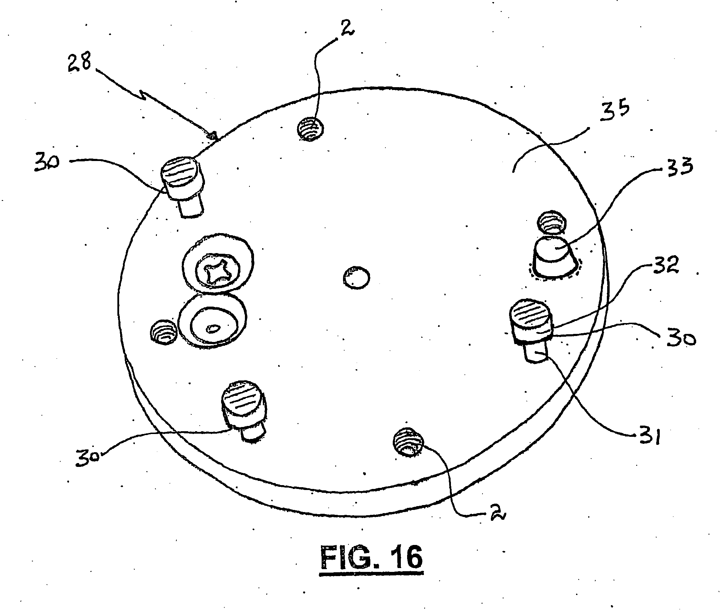

The pins 30 have a body 31 and a head 32 (figure 16) having a greater diameter than the body 31. When the plate 28 and the ring nut 27 are coupled, the sliding of the pins 30 from the apertures 29 is prevented by the narrowing section of each aperture 29, which narrowing retains the head 32 of the pins 30.

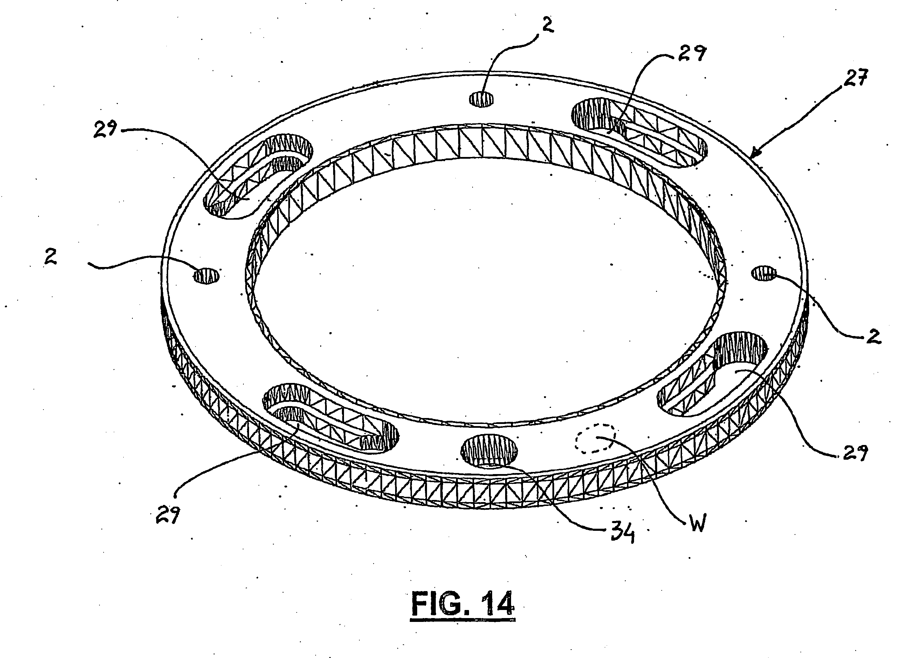

The locking/unlocking device of the coupling between the ring nut 27 and the circular plate 28 can be made in many different ways, equivalent to one another. In the case illustrated (figures 14 - 16), such device comprises a plug 33 installed on the plate 28 that can be engaged in a suitable hole 34 present on the surface of the ring nut 27. It is understood that the positions of the plug 33 and the hole 34 can be inverted without influencing the functionality of the coupling and of the locking/unlocking device thereof.

The plug 33 is mobile along its own axis between a first position, corresponding to its maximum extension from the surface 35 of the plate 28, and a second position, in which the same plug is entirely housed in the plate 28 and does not protrude from its surface 35. Preferably, a contrast element, such as a spring, is present inside the plug 35 in order to take it back to its first position, following one of its shifts.

When the plate 28 is coupled to the ring nut 27, the plug 35 rests initially on portion **W** of the ring nut 27. Simultaneously to the introduction of the pins 30 in the apertures 29, the plug 33 is pushed into its second position. As illustrated in figure 15, the plate 28 is turned in the direction of the arrow **R** in order to make the fit between the pins 30 and the apertures 29. At the moment in which the plug 33 intercepts the hole 34, the contrast element inside the same plug 33 takes it back to its first position. It follows that once the coupling between the plate 28 and the ring nut 27 has been finished, the plug 33 engages the hole 34, thus preventing the relative rotation between these elements.

The plug 33 can be activated manually, for example, by a lever (not illustrated) present on the side surface of the plate 28, or can be connected to a safety system, for example provided with a lock. The safety system can be installed directly on the ring nut 27 or on the plate 28, or it can be installed on the object to be anchored to the motor vehicle or on the motor vehicle itself.

Preferably the plug 33 is integrally coupled to a metal cable, for example welded inside thereof or screwed to it, a cable that if tensioned takes the plug 33 into its second position, thus overcoming the resistance of the contrast element, and thus enabling the disengagement of the plug 33 from the hole 34. The cable can be tensioned, or released, by a mechanism commanded by a traditional type lock or equivalent thereof, for example a lock with combination. This safety system makes it possible to lock or unlock the plug 33 also by activating a lock that is not located directly on the ring nut 27 or on the plate 28.

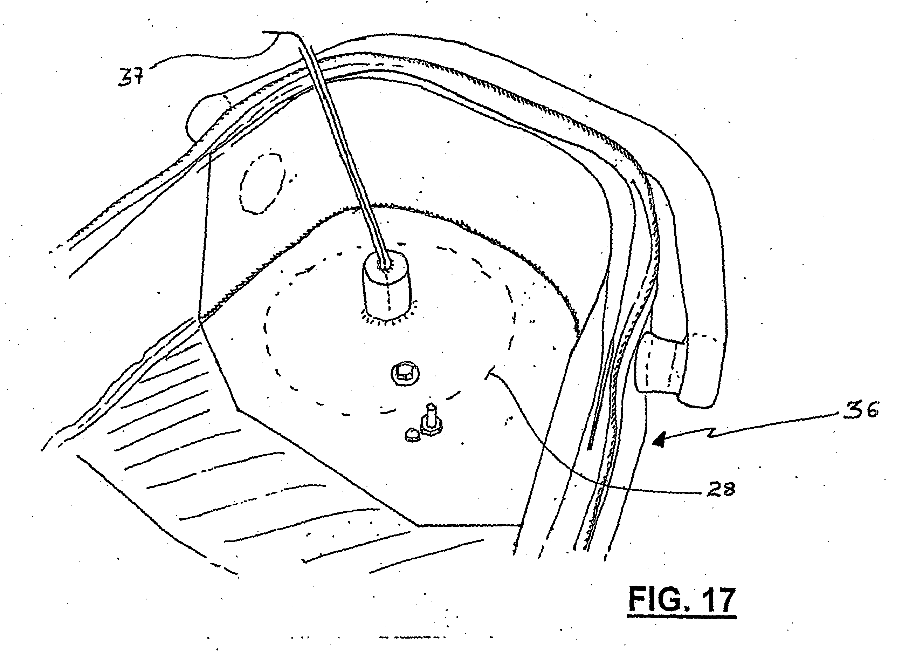

Figure 17 illustrates a possible application of the support according to the invention, applied to a bag 36. In this case the circular plate 28 (dotted line) is integral to the bottom of the bag 36, whereas the ring nut 27 is provided coupled to the crown 1a of the cap 1 of the motorcycle tank S in an equivalent way to the case shown in figure 12. In particular, the bag 36 of figure 17 is illustrated open. In order to anchor the bag 36 to the tank S it is sufficient to rest the bottom of the bag 36 on the ring nut 27, so as to insert the pins 30 of the plate 28 into the apertures 29 of the ring nut 27, and rotate the bag 36 in order to complete the coupling. The plug 33 by engaging in the hole 34 will lock said coupling. In order to prevent the theft of the bag 36, a safety device is provided coupled to the plug 33. A metal cable 37, wrapped in a sheath, is provided sliding in a suitable hole on the bottom of the bag 36 and is coupled in an integral way to the plug 33, for example screwed inside thereof. By pulling the cable 37 the plug 33 disengages from the hole 34 and thus unlocks the ring nut/plate coupling. The free end of the cable 37 can be, for example, tensioned and released by a mechanical device activated by a lock (not shown). In the case in which a lock is foreseen, this can be of the traditional type, and thus operable by a key, or it can be of the numerical combination type. The presence of the safety device, and in particular of a lock, drastically reduces the possibility of the bag 36, and in general of the object supported being stolen, when, for example, the vehicle is parked, unguarded.

The lock can be installed directly on the bag 36 and the corresponding key can be the same that activates the other locks present on the motorcycle or any lockers.

According to another embodiment of the present invention the abovementioned lock can be activated by an optional centralised closing system of the motorcycle's locks.

In a further embodiment of the present invention (not illustrated) the support device, for example the ring nut 4 or the brackets 12, may function as a support , or as a constraint point, for an anti-theft system of the type in which, thanks to a lock or padlock, the relative movement of an organ necessary for movement, such as the handlebars or a wheel of the motorcycle, is prevented or limited.

Anti-theft devices of this type usually comprise a clamp, or other clamping device, that can be bound to the organ of the motorcycle to be immobilised and a contrast end suitable to engage, in a reversible way, with another part of the same motorcycle in order to enable the relative locking between the organ to block and the motorcycle itself.

In this case, ring nut 4 may comprise a suitably shaped portion to be bound to the contrast end of the anti-theft system, whilst the clamp of the anti-theft system is fixed to the organ necessary for movement, such as for example a handlebar or wheel. A locking device commanded by a lock then makes it possible to lock, in a given mutual position, the handlebars or the wheel in relation to the ring nut 4, thus preventing any relative movement of the handlebar or wheel in relation to the motorcycle.

In a simpler embodiment, the anti-theft device can be of the chain type provided with a padlock, and in this case the ring nut 4, according to a particular aspect of the present invention, can comprise a retainer ring for the chain itself. The latter thus engages between the ring of the ring nut 4 and, in special seats or according to an arrangement suited to the purpose, with the handlebars or a wheel of the motorcycle to prevent or restrict motion, thanks to the closure padlock.

## Claims

1. A universal support device (4, 12, 27) for motorcycle accessories being fixed directly to the cap (1) of a motorcycle fuel tank, the cap (1) comprising an outer portion or outer crown (1a) associated with a removable inner element (1b), **characterized in that** said support device is attached by screws (2, 10) either to said cap of the tank or to said outer crown of said cap of the tank, and **in that** it provides the replacement of at least two screws (2) fixing said cap of the tank to the tank itself, with a different type of screw (10) having anchorage means comprised in the head portion such as to enable the coupling with said motorcycle accessories.

2. The device according to claim 1, comprising an annular ring nut (4, 27) fixed by screws (2; 10) either to said cap (1) of the tank or said outer crown (1a) of said cap of the tank.

3. The device according to claim 2, **characterised in that** said ring nut is threaded either on the outer surface or inner surface thereof for coupling with said motorcycle accessories.

4. The device according to claim 2, **characterised in that** said ring nut is provided with coupling means (5, 6, 7; 8, 9) for said motorcycle accessories, such means being formed as at least one hooking device.

5. The device according to claim 2, **characterised in that** said ring nut is provided with coupling means (5, 6, 7; 8, 9; 13, 14) for said motorcycle accessories, such means being formed as at least one hooking device having release lever, or at least one sliding fitting, a mortise-joint coupling, of the swallow tail, bayonet or guillotine type.

6. The device according to claim 2, **characterised in that** said ring nut is associated to one or more fabric flaps (25) provided with a zip to enable objects to be attached to the tank.

7. The device according to claim 1, **characterised in that** it is made in the form of at least two semi-circular brackets (12) each one provided with suitable coupling means (13, 14) to said motorcycle accessories, such means being made in the form of at least one automatic lock closure, at least one hooking device having one release lever, or at least one sliding fitting, a mortise joint coupling, of the swallow-tail, bayonet or guillotine type.

8. The device according to one of the previous claims, **characterised by** providing a safety system comprising means (29, 30, 33, 34, 37), that can be activated by the user, in order to lock or unlock the coupling of said accessories with the motorcycle.

9. The device according to claim 8, **characterised in that** said safety system is driven by a lock or similar mechanism.

10. The device according to claim 9, **characterised in that** said lock is connected to the centralised closure system of said motorcycle.

11. The device according to claim 9, **characterised in that** said lock is activated by the ignition key of said motorcycle.

12. The device according to one of claims 8 to 11, **characterised in that** said lock, or said similar mechanism, is provided on said accessories.

13. The device according to one of claims 8 to 12, **characterised in that** said safety system comprises a shaped plate (28) that can be coupled to a ring nut (27), respectively fixable to at least one of said accessories and to the motorcycle cap (1), or vice versa, said plate (28) being mobile in relation to the ring nut (27), or vice versa, between at least one mutual fixing position and at least one mutual disengagement position.

14. The device according to one of the previous claims, **characterised by** comprising a shaped portion to form a constraining point for an anti-theft system of the motorcycle, of the type in which the relative movement of an element necessary for motion is reversibly prevented or restricted.

15. A motorcycle provided with a device according to any of claims 1 to 14.

16. Use of the device according to claim 1 for the support of various accessories for motorcycle use, communication systems, gadgets.

17. A protective tarpaulin (16) for motorcycles **characterised by** being adapted to be coupled to the device according to one of the claims 3-13, and including additional hooking means to the motorcycle of the magnet, ties or strings or Velcro straps type, such as to enable an efficient covering of the vehicle and/or the driver by means of the tarpaulin.

18. Object holder container adapted to be coupled to the device of one of the claims 3-13.

19. Helmet retainer device comprising means (24) which are able to wrap a helmet (23), and **characterised by** being adapted to be coupled to the device according to one of the claims 3-13.

## Patentansprüche

1. Universelles Tragesystem (4, 12, 27) zur Befestigung von Motorradzubehör unmittelbar an den Deckel (1) eines Motorrad-Kraftstofftanks, der Deckel (1) umfassend einen äußeren Bereich oder äußeren Kranz (1 a), verbunden mit einem abnehmbaren inneren Element (1 b), **dadurch gekennzeichnet, dass** das Tragsystem mit Schrauben (2, 10) entweder an dem Deckel des Tanks oder an dem äußeren Kranz des Deckels des Tanks befestigt ist, und dass dieses den Austausch von mindestens zwei Schrauben (2), welche den Deckel des Tanks am Tank selbst befestigen, vorsieht durch einen anderen Typ von Schraube (10) mit im Kopfbereich vorhandenen Verankerungsvorrichtungen, um so das Koppeln mit dem Motorradzubehör zu ermöglichen.

2. System nach Anspruch 1, umfassend einen kranzförmigen Schraubring (4, 27), durch Schrauben (2; 10) entweder an dem Deckel (1) des Tanks oder an dem äußeren Kranz (1a) des Deckels des Tanks befestigt.

3. System nach Anspruch 2, **dadurch gekennzeichnet, dass** der Schraubring entweder an der äußeren Oberfläche oder an der inneren Oberfläche desselben ein Gewinde zur Kopplung mit dem Motorradzubehör besitzt.

4. System nach Anspruch 2, **dadurch gekennzeichnet, dass** der Schraubring bereitgestellt wird mit Kopplungsvorrichtungen (5, 6, 7; 8, 9) für das Motorradzubehör, und die Vorrichtungen als mindestens eine Einhakvorrichtung ausgebildet sind.

5. System nach Anspruch 2 oder Anspruch 3, **dadurch gekennzeichnet, dass** der Schraubring bereitgestellt wird mit Kopplungsvorrichtungen (5, 6, 7; 8, 9; 13, 14) für das Motorradzubehör, und diese Vorrichtungen ausgebildet sind als mindestens eine Einhakvorrichtung mit einem Lösehebel, oder mindestens einem Schiebeverschluss, einer Zapfenverbindung vom Schwalbenschwanz-, Bajonett- oder Guillotinentyp.

6. System nach Anspruch 2, **dadurch gekennzeichnet, dass** der Schraubring verbunden ist mit einer oder mehreren Gewebelaschen (25), bereitgestellt mit einem Reißverschluss, um die Befestigung von Objekten am Tank zu ermöglichen.

7. System nach Anspruch 1, **dadurch gekennzeichnet, dass** dieses in der Form von mindestens zwei halbkreisförmigen Klammem (12) ausgebildet ist, von denen jede mit zu dem Motorradzubehör passenden Kopplungsvorrichtungen (13, 14) bereitgestellt wird, und diese Vorrichtungen gefertigt sind in der Form von mindestens einem automatischen Verriegelungsverschluss, mindestens einer Einhakvorrichtung mit einem Lösehebel, oder mindestens einem Schiebeverschluss, einer Zapfenverbindung vom Schwalbenschwanz-, Bajonett- oder Guillotinentyp.

8. System nach einem der vorangegangenen Ansprüche, **gekennzeichnet durch** die Bereitstellung eines Sicherungssystems, umfassend Vorrichtungen (29, 30, 33, 34, 37), welche **durch** den Anwender aktiviert werden können, um die Kopplung des Zubehörs mit dem Motorrad zu verriegeln oder zu entriegeln.

9. System nach Anspruch 8, **dadurch gekennzeichnet, dass** das Sicherungssystem gesteuert wird durch ein Schloss oder einen ähnlichen Mechanismus.

10. System nach Anspruch 9, **dadurch gekennzeichnet, dass** das Schloss verbunden ist mit dem zentralen Verschlusssystem des Motorrads.

11. System nach Anspruch 9, **dadurch gekennzeichnet, dass** das Schloss durch den Zündschlüssel des Motorrads aktiviert wird.

12. System nach einem der Ansprüche 8 bis 11, **dadurch gekennzeichnet, dass** das Schloss, oder der ähnliche Mechanismus, an dem Zubehör bereitgestellt wird.

13. System nach einem der Ansprüche 8 bis 12, **dadurch gekennzeichnet, dass** das Sicherungssystem eine geformte Platte (28) umfasst, welche mit einem Schraubring (27) gekoppelt werden kann, beziehungsweise an mindestens einem der Zubehörteile und an dem Tankdeckel (1) befestigt werden kann, oder umgekehrt, und die Platte (28) relativ zum Schraubring (27), oder umgekehrt, beweglich ist zwischen mindestens einer beiderseitigen Befestigungsposition und mindestens einer beiderseitigen Ablösungsposition.

14. System nach einem der vorangegangen Ansprüche, **gekennzeichnet durch** Umfassen eines geformten Bereichs zur Ausbildung eines Sperrpunkts für eine Diebstahlsicherung des Motorrads, von der Art, bei welcher die Relativbewegung eines zur Bewegung notwendigen Elements umkehrbar verhindert oder eingeschränkt werden kann.

15. Motorrad, bereitgestellt mit einem System nach einem der Ansprüche 1 bis 14.

16. Verwendung des Systems nach Anspruch 1 zum Tragen verschiedenen Zubehörs zur Verwendung am Motorrad, Kommunikationssystemen und nützlichen Gerätschaften.

17. Wetterschutzplane (16) für Motorräder, **dadurch gekennzeichnet, dass** diese ausgebildet ist, an das System nach einem der Ansprüche 3 bis 13 gekoppelt zu werden und zusätzliche Vorrichtungen zur Befestigung am Motorrad einschließt, in Form von Magneten, Schnüren oder Bändern oder Klettbändern, um so ein wirksames Abdecken des Fahrzeugs und / oder des Fahrers mittels der Plane zu ermöglichen.

18. Objekthalterbehälter, angepasst, um mit dem System aus einem der Ansprüche 3 bis 13 gekoppelt zu werden.

19. Helmhaltersystem, umfassend Vorrichtungen (24), welche einen Helm (23) umhüllen können, und **dadurch gekennzeichnet, dass** dieses angepasst ist, um mit dem System nach einem der Ansprüche 3 bis 13 gekoppelt zu werden.

## Revendications

1. Dispositif polyvalent de support (4, 12, 27) pour accessoires de motocycles étant fixé directement sur le bouchon (1) d'un réservoir de carburant de motocycle, le bouchon (1) comprenant une partie externe ou une couronne extérieure (1a) associée à un élément interne amovible (1 b), **caractérisé en ce que** ledit dispositif de support est fixé par des vis (2, 10) soit sur ledit bouchon du réservoir ou sur ladite couronne extérieure dudit bouchon du réservoir, et **en ce qu'**il fournit le remplacement d'au moins deux vis (2) fixant ledit bouchon du réservoir sur le réservoir lui-même, avec un différent type de vis (10) ayant des moyens d'ancrage compris dans la partie de tête de manière à permettre le couplage avec lesdits accessoires de motocycles.

2. Dispositif selon la revendication 1, comprenant un écrou à anneau annulaire (4, 27) fixé par vis (2; 10) soit sur ledit bouchon (1) du réservoir soit sur ladite couronne extérieure (1a) dudit bouchon du réservoir.

3. Dispositif selon la revendication 2, **caractérisé en ce que** ledit écrou annulaire est fileté soit sur la surface externe soit sur sa surface interne afin de s'accoupler avec lesdits accessoires de motocycles.

4. Dispositif selon la revendication 2, **caractérisé en ce que** ledit écrou annulaire est muni de moyens de couplage (5, 6, 7 ; 8, 9) pour lesdits accessoires de motocycles, de tels moyens étant munis d'au moins un dispositif d'accrochage.

5. Dispositif selon la revendication 2, **caractérisé en ce que** ledit écrou annulaire est muni de moyens de couplage (5, 6, 7 ; 8, 9 ; 13, 14) pour lesdits accessoires de motocycles, de tels moyens étant munis d'au moins un dispositif d'accrochage ayant un levier de libération, ou au moins une glissière, un accouplement de liaison à mortaise, du type queue d'aronde, baïonnette ou guillotine.

6. Dispositif selon la revendication 2, **caractérisé en ce que** ledit écrou annulaire est associé à un ou plusieurs lambeau(x) de tissu (25) muni(s) d'une glissière pour permettre la fixation des objets sur le réservoir.

7. Dispositif selon la revendication 1, **caractérisé en ce qu'**il a la forme d'au moins deux supports semi-circulaires (12), chacun d'eux étant muni de moyens de couplage (13, 14) adaptés auxdits accessoires de motocycles, de tels moyens ayant la forme d'au moins une fermeture à verrouillage automatique, au moins un dispositif d'accrochage ayant un levier de libération, ou au moins une glissière, un accouplement de liaison à mortaise, du type queue d'aronde, baïonnette ou guillotine.

8. Dispositif selon l'une quelconque des revendications précédentes, **caractérisé par** la fourniture d'un système de sécurité comprenant des moyens (29, 30, 33, 34, 37), pouvant être actionné par l'utilisateur, afin de verrouiller ou de déverrouiller le couplage desdits accessoires avec le motocycle.

9. Dispositif selon la revendication 8, **caractérisé en ce que** ledit système de sécurité est mené par un verrou ou un mécanisme similaire.

10. Dispositif selon la revendication 9, **caractérisé en ce que** ledit verrou est relié au système de fermeture centralisé dudit motocycle.

11. Dispositif selon la revendication 9, **caractérisé en ce que** ledit verrou est actionné par la clé de contact dudit motocycle.

12. Dispositif selon l'une des revendications 8 à 11, **caractérisé en ce que** ledit verrou, ou ledit mécanisme similaire, est fourni sur lesdits accessoires.

13. Dispositif selon l'une des revendications 8 à 12, **caractérisé en ce** ledit système de sécurité comprend une plaque façonnée (28) pouvant être couplée à un écrou annulaire(27), pouvant être fixé respectivement à au moins un desdits accessoires et sur le bouchon du motocycle (1), ou vice versa, ladite plaque (28) pouvant se déplacer par rapport à l'écrou annulaire (27), ou vice versa, entre au moins une position de fixation mutuelle et au moins une position de désengagement mutuel.

14. Dispositif selon l'une des revendications précédentes, **caractérisé en ce qu'**il comprend une partie façonnée pour former un point de contrainte pour un système antivol du motocycle, du type dans lequel le mouvement relatif d'un élément nécessaire au mouvement est empêché ou restreint de manière réversible.

15. Motocycle muni d'un dispositif selon l'une quelconque des revendications 1 à 14.

16. Utilisation du dispositif selon la revendication 1 pour le support de différents accessoires pour l'utilisation du motocycle, de systèmes de communication, de gadgets.

17. Bâche de protection (16) pour motocycles **caractérisée en ce qu'**elle est adaptée pour être couplée au dispositif selon l'une des revendications 3 à 13, et comprenant des moyens d'accrochage supplémentaires sur le motocycle du type aimant, attache, chaine ou sangle en velcro, de manière à permettre un recouvrement efficace du véhicule et/ou du conducteur grâce à la bâche.

18. Conteneur de support d'objet adapté pour être couplé au dispositif d'une des revendications 3 à 13.

19. Dispositif de retenue à casque comprenant des moyens (24) lesquels sont capables de cercler un casque (23), et **caractérisé en ce qu'**ils sont adaptés pour être couplés au dispositif selon l'une des revendications 3 à 13.
